## Europäisches Patentamt

## European Patent Office

## Office européen des brevets

(11) Veröffentlichungsnummer: **0 115 311**
**B1**

(12) # EUROPÄISCHE PATENTSCHRIFT

(45) Veröffentlichungstag der Patentschrift:
**06.04.88**

(51) Int. Cl.⁴: **G 21 F 9/36**

(21) Anmeldenummer: **84100642.2**

(22) Anmeldetag: **21.01.84**

(54) Verfahren zum Einkapseln von radioaktivem oder anderem gefährlichem Material und Behälter zur Duchführung des Verfahrens.

(30) Priorität: **26.01.83 SE 8300387**

(43) Veröffentlichungstag der Anmeldung:
**08.08.84 Patentblatt 84/32**

(45) Bekanntmachung des Hinweises auf die Patenterteilung:
**06.04.88 Patentblatt 88/14**

(84) Benannte Vertragsstaaten:
**DE FR GB**

(56) Entgegenhaltungen:
**EP-A-0 044 381**
**EP-A-0 044 692**
**FR-A-2 369 659**
**US-A-3 160 502**

**The American Ceramic Society Bulletin, Vol.62, No.12, Dec.83, Seite 1389 ff.**

(73) Patentinhaber: **ASEA AB, S-721 83 Västeras (SE)**

(72) Erfinder: **Burström, Martin, Phil. Mag., Tallstigen 12, S-915 00 Robertsfors (SE)**
Erfinder: **Tegman, Ragnar, Dr. phil., Rödhakevägen 32, S-902 37 Umea (SE)**

(74) Vertreter: **Boecker, Joachim, Dr.- Ing., Rathenauplatz 2-8, D-6000 Frankfurt a.M. 1 (DE)**

EP 0 115 311 B1

## Beschreibung

Die Erfindung betrifft ein Verfahren zum Einkapseln von radioaktivem oder anderem gefährlichem Material gemäß dem Oberbegriff des Anspruches 1 sowie einen Behälter zur Durchführung des Verfahrens. Ein solches Verfahren ist im wesentlichen bekannt aus der EP-A-0 044 381.

Beim Betrieb von Kernkraftreaktoren und bei der Aufarbeitung von verbrauchtem Kernbrennstoff entstehen radioaktive Abfallprodukte, die für lange Zeit sicher aufbewahrt werden müssen, um ihr Eindringen in die Biosphäre zu verhindern. Diese Abfallprodukte können als partikelförmiges Material (kleine Teilchen) oder stückförmiges Material vorliegen. Das partikelförmige Material kann aus hochaktiven, verbrauchten Ionenaustauschermassen und Restprodukten aus dem Aufbereitungsprozeß bestehen, die in feste Form übergeführt wurden. Das stückförmige Material kann aus Stücken von Verbindungsrohren bestehen. Das Verfahren zur Herstellung eines massiven Körpers, der gegen Auslaugen der radioaktiven Produkte durch Wasser beständig ist, wird genauer in der DE-A-27 47 951 sowie in der EP-A-81 10 3570.8 beschrieben.

Das radioaktive Material von Filtern und der in festes Material übergeführte hochaktive Abfall von Aufbereitungsanlagen werden mit einer Masse eines gegen Auslaugen durch Wasser beständigen Materials gemischt, in Behälter gefüllt und bei hohem isostatischem Druck und solcher Temperatur heißgepreßt (HIP), daß eine Bindung zwischen den beteiligten Teilchen zustandekommt und man einen dichten, festen Körper erhält. Dieser Pressung kann ein isostatisches Pressen bei Zimmertemperatur (CIP) vorausgehen. Stückförmiges Material, z. B. Stücke von Brennstoffhüllen, kann allein oder zusammen mit partikelförmigem oder kornförmigem Material gepreßt werden, durch welches die Fülldichte gesteigert und die Beständigkeit gegen Auslaugen durch Wasser erhöht wird.

Bei kaltem isostatischem Pressen (CIP) oder heißem isostatischem Pressen (HIP) von Behältern, die in solcher Weise mit Material gefüllt sind, daß der Füllungsgrad niedrig ist, wird der Behälter stark deformiert. Wenn der Füllungsgrad 50 % unterschreitet, erfolgt die Verdichtung bei heißem isostatischem Pressen (HIP) im allgemeinen instabil, was in einer nicht vorhersagbaren Formveränderung resultiert. Die Behälterwand kann dabei örtlich stark deformiert und dadurch großen Beanspruchungen ausgesetzt werden. Dies kann zur Folge haben, daß die Behälterwand reißt und Druckmittel in den Behälter eindringt, so daß eine kalte oder heiße isostatische Zusammenpressung nicht mehr möglich ist. Besonders nachteilig ist dies dann, wenn die Rückgewinnung des Materials kostspielig ist oder das Material partikelförmig und giftig oder radioaktiv ist und bei der Drucksenkung mit dem Druckmittel in der Anlage verbreitet wird.

Aus der EP-A-0 044 381 ist es bekannt, beim Kompaktieren von Material mit geringem Füllfaktor einen Behälter mit einer gewellten, balgenähnlichen zylindrischen Wand zu verwenden, um die Verformung zu erleichtern und die Gefahr einer Verzerrung beim Pressen zu verringern. Hierbei ist jedoch eine starke örtliche Verformung in den Anschlußbereichen des Deckels und des Bodens an die balgenähnliche zylindrische Wand des Behälters aufgetreten.

Aus der EP-A-0 044 692 ist es bekannt, radioaktive Abfälle auf mechanischem Wege zu Blöcken zu verpressen. Die Preßvorrichtung besteht dabei aus einem Führungsblock mit einer zylindrischen Bohrung, in welche der Behälter mit dem radioaktiven Material eingesetzt wird. Die Zusammenpressung erfolgt dann durch Druckstempel, die von einer oder beiden Seiten in achsialer Richtung auf die Charge wirken. Dabei kann der Behälter mit einer balgenähnlichen zylindrischen Wand aufgebaut sein, und innerhalb des Behälters kann ein an den Enden offener Zylinder mit einer geschlossenen oder perforierten Wand angeordnet sein, der von der Innenseite der balgenähnlichen Außenwand nur einen geringen Abstand hat. Ein solcher Innenzylinder weist keine unterschiedlichen Festigkeitseigenschaften in achsialer und radialer Richtung auf.

Der Erfindung liegt die Aufgabe zugrunde, ein Verfahren der eingangs genannten Art nebst einem Behälter zur Durchführung des Verfahrens zu entwickeln, bei dem die oben genannten starken Verformungen im Deckel- und Bodenbereich und die damit verbundene Gefahr eines Bruchs oder einer Undichtigkeit vermindert werden und bei welchem auch bei Verwendung eines langen Behälters eine gleichmäßige Verformung ohne Verbiegungen erreicht werden kann.

Zur Lösung dieser Aufgabe wird ein Verfahren nach dem Oberbegriff des Anspruches 1 vorgeschlagen, welches erfindungsgemäß die im kennzeichnenden Teil des Anspruches 1 genannten Merkmale hat.

Vorteilhafte Weiterbildungen des Verfahrens sind in den Ansprüchen 2 - 6 genannt.

Ein Behälter zur Durchführung des Verfahrens ist gemäß der Erfindung durch die im Anspruch 7 genannten Merkmale gekennzeichnet.

Vorteilhafte Weiterbildungen des Behälters gemäß der Erfindung sind in den Ansprüchen 8 - 11 genannt.

Gemäß der Erfindung wird das gefährliche Material in einen Behälter mit einer zylindrischen, gewellten, balgenähnlichen Wand gefüllt, jedoch daran gehindert, die ringförmigen Räume auszufüllen, die durch die Wellung der Wand am Umfang des Behälters gebildet werden. Dies wird dadurch erreicht, daß die genannten Räume durch eine zylindrische innere Wand des Behälters abgedeckt werden. Diese innere Wand kann auf verschiedene Arten aufgebaut sein, was von der Art des zu pressenden Materials abhängt. Im Hinblick darauf, daß die innere Wand einerseits einen kleinen Widerstand dem axialen Zusammenpresen des Behälters entgegensetzen soll und andererseits effektiv verhindern soll, daß das gefährliche Material beim Fressen in die durch die Wellen gebildeten ringförmigen Räume eindringt, ist ihr Aufbau von großer Bedeutung. Ein Zylinder aus einem feinmaschigen Netz kann Stücke von Brennstoffhüllen daran hindern, die Wellen auszufüllen. Um zu verhindern, daß feinkörniges Material die Wellen ausfüllt, ist eine verhältnismäßig dichte, jedoch gasdurchlässige Wand erforderlich. Diese Wand kann aus mehreren Schichten bestehen, z. B. aus einem oder mehreren Zylindern aus Drahtnetz und zwischen oder radial innerhalb dieser Drahtnetzzylinder aus einer oder mehreren Schichten eines keramischen papier- oder filzähnlichen Materials. Die Orientierung der Drähte in den Netzzylindern, die die innere Wand bilden, ist von großer Bedeutung. Mindestens eine Schicht aus Drahtnetz in der inneren Wand soll Drähte enthalten, die sich um mehr als eine Windung um die Wand herumerstrecken und die im wesentlichen senkrecht zur Längsachse des Behälters verlaufen. Wenn die innere Wand auf diese Weise aus einem oder mehreren Netzen aufgebaut ist, bewahrt sie bei der Kompaktierung ihren Durchmesser. Die axial orientierten Drähte der Wand verbiegen sich dagegen bereits bei einer geringen axialen Belastung und bilden daher keinen nennenswerten Widerstand bei dem im wesentlichen axialen Zusammendrücken der äußeren, gewellten Wand während des isostatischen Pressens.

Das radioaktive oder auf andere Weise gefährliche Material kann in eine Masse eines Pulvers aus einem gegen Auslaugen beständigen Material eingemischt sein, das metallischer oder keramischer Art sein kann. Die Masse kann beispielsweise aus Zirkaloy, einem synthetischen Gesteinsmaterial, wie z. B. einem Material mit der Bezeichnung SYNROC®, einem natürlichen Gesteinsmaterial, wie z. B. einem Silikatmaterial, Quarz oder einem Metalloxid, wie z. B. Titandioxid, bestehen.

Anhand der Figuren soll die Erfindung näher erläutert werden. Es zeigen

Figur 1 einen Schnitt durch einen Behälter gemäß der Erfindung, wie er bei dem Verfahren gemäß der Erfindung zum isostatischen Pressen von gefährlichem Material verwendet werden kann,

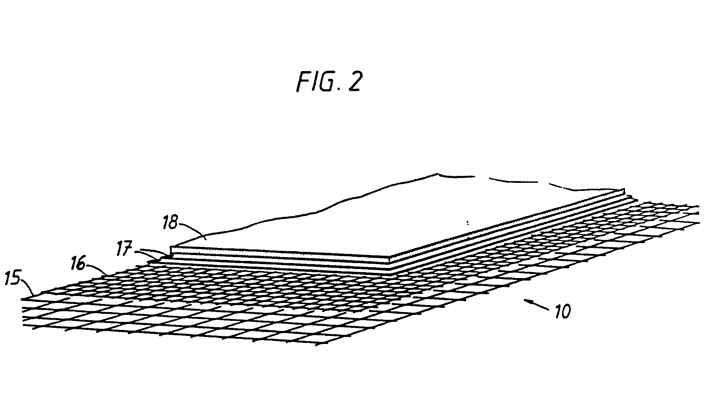

Figur 2 ein Ausführungsbeispiel für den Aufbau der inneren zylindrischen Wand des Behälters.

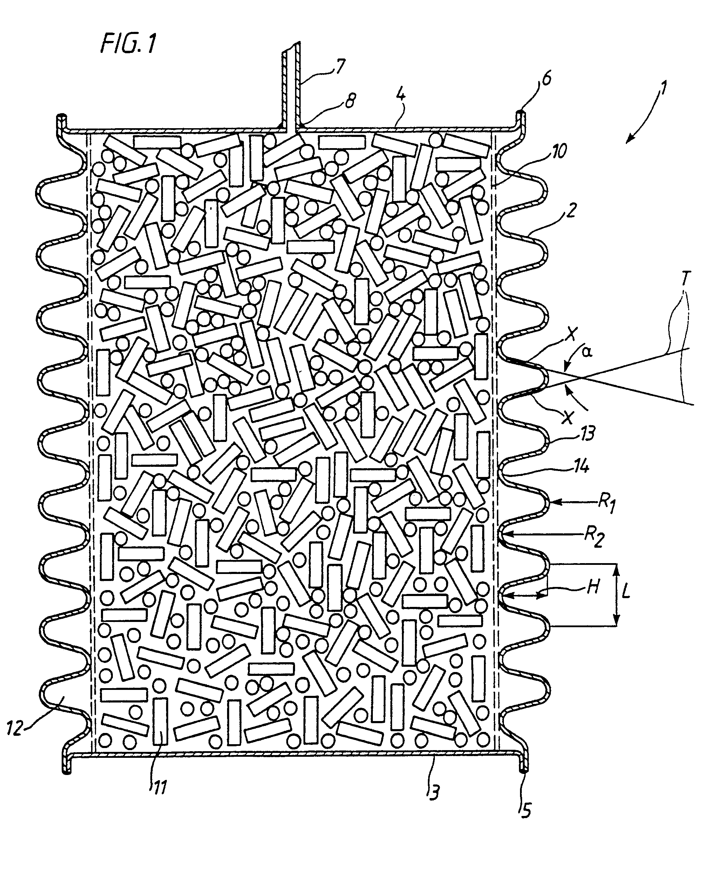

In Figur 1 bezeichnet 1 einen Behälter, der aus einer gewellten, balgenähnlichen zylindrischen Wand 2 aufgebaut ist, die unten und oben gasdicht mit einem Boden 3 beziehungsweise einem Deckel 4 durch Schweißnähnte 5 bzw. 6 verbunden ist. An den Deckel ist ein Evakuierungsstutzen 7 mittels einer Schweißnaht 8 angeschlossen. In dem gewellten Zylinder ist ein Zylinder mit geradliniger Wand 10 angeordnet, der verhindert, daß das Material 11 beim Füllen des Behälters und während des Pressens in die ringförmigen Räume 12 eindringt. In der Figur ist der Behälter 1 mit Stücken von Brennstoffhüllen aus Zircaloy gefüllt, die als Abfallprodukte anfallen. Das Legierungsmaterial, aus dem diese Hüllen bestehen, kann radioaktive Elemente enthalten, die sich während der Verwendung im Reaktor gebildet haben, oder an seiner Oberfläche können sich radioaktive Verunreinigungen abgesetzt haben. Die Wellung der Zylinderwand 2 ist zweckmäßigerweise so ausgebildet, daß die Tangenten T in den Wendepunkten X der gewellten Wand 2 einen spitzen Winkel Alfa miteinander bilden, der vorzugsweise kleiner als 60 Grad ist. Der Krümmungsradius $R_1$ am Wellenberg 13 ist vorzugsweise kleiner als der Krümmungsradius $R_2$ im Wellental 14. Die Wellenhöhe H der Wellung ist vorzugsweise 0,5 bis 2 mal so groß wie die Wellenlänge L.

Der Zylinder 10 im Behälter 1 kann, wenn der Behälter zum Pressen von feinkörnigem Material verwendet werden soll, aus einer ersten Schicht eines äußeren ersten Metallnetzes 15 und eines zweiten inneren Metallnetzes 16 aufgebaut sein. Das Netz 16 hat eine kleinere Maschengröße als das Netz 15. Die Maschengröße des äußeren Netzes 15 kann ca. 2,5 mm und die des inneren Netzes 16 ca. 1 mm betragen. Radial innerhalb dieser Netzschichten 15, 16 sind eine oder mehrere Schichten 17 aus einem papierähnlichen, keramischen Material, z. B. ein Material, das unter dem Warenzeichen TRITON-KAOWOOL bekannt ist, angebracht. Auf diesen Schichten kann eine Schicht aus $ZrO_2$-Filz 18 angebracht sein, die verhindert, daß das zu pressende Material 11 mit der zylindrischen Trennwand 10 verbunden wird. Diese Schicht 18 bildet eine Gleitschicht, die das Pressen erleichtert und eine Übertragung von Kräften zwischen dem Behälter und dem beim Fressen gebildeten massiven Körper verhindert. Eine Trennwand 10 der beschriebenen Art, die aus Netzzylindern und aus dichtendem, scheibenförmigem Material aufgebaut ist, hat eine hohe radiale Festigkeit und einen niedrigen axialen Verformungswiderstand, was beim Pressen von großem Vorteil ist.

## Patentansprüche

1. Verfahren zum Einkapseln von radioaktivem oder anderem gefährlichem Material (11), welches Material partikel- und/oder stückförmig vorliegt, und zwar entweder allein oder eingemischt in eine gegen Auslaugen durch Wasser beständige Masse, in einen gasdichten Behälter (1) und zum isostatischen Pressen des in dem Behälter (1) befindlichen Materials zu einem zusammenhängenden dichten Körper bei einer für die Verbindung erforderlichen Temperatur, wobei das gefährliche Material (11) oder die das gefährliche Material (11) enthaltende Masse in einen Metallbehälter (1) gefüllt wird, der eine gewellte, balgenähnliche zylindrische erste Wand (2) hat, <u>dadurch gekennzeichnet</u>, daß der Metallbehälter (1) - radial von innen gesehen - eine vor der genannten ersten Wand (2) angeordnete zylindrische zweite Wand (10) hat, zu welcher mindestens ein Drahtnetz (15, 16) gehört, welches zylindrisch verlaufende Drähte enthält, die im wesentlichen senkrecht zur Längsachse des Behälters (1) gerichtet sind, daß die Dichte des Drahtnetzes der zylindrischen zweiten Wand (10) so bemessen und die zylindrischen zweite Wand (10) im übrigen so aufgebaut ist, daß das gefährliche Material (11) nicht in die Räume (12) zwischen den Wellen der äußeren zylindrischen ersten Wand (2) und der inneren zylindrischen zweite Wand (10) eindringen kann, daß der Behälter evakuiert und geschlossen wird und daß der Behälter danach erhitzt und in einem Druckofen mittels eines Gases in an sich bekannter Weise isostatisch gepreßt wird.

2. Verfahren nach Anspruch 1, dadurch gekennzeichnet, daß das gefährliche Material (11) mit einem beständigen metallischen Material, wie z. B. Zircaloy, gemischt wird.

3. Verfahren nach Anspruch 1, dadurch gekennzeichnet, daß das gefährliche Material (11) mit einer in der Natur vorkommenden Gesteinsart wie z. B. einem Silikatmaterial oder einem synthetischen Gesteinsmaterial, wie z. B. SYNROC®, gemischt wird.

4. Verfahren nach Anspruch 1, dadurch gekennzeichnet, daß das gefährliche Material (11) mit einem Glas, wie z. B. Borsilikatglas, gemischt wird.

5. Verfahren nach Anspruch 1, dadurch gekennzeichnet, daß das gefährliche Material (11) mit Quarz gemischt wird.

6. Verfahren nach Anspruch 1, dadurch gekennzeichnet, daß das gefährliche Material (11) mit titandioxyd gemischt wird.

7. Behälter (1) zum Einkapseln von radioaktivem oder anderem gefährlichen Material (11), welches Material partikel- und/oder stückförmig vorliegt, und zwar entweder allein oder eingemischt in eine gegen Auslaugen durch Wasser beständige Masse, und welches Material durch isostatisches Heizpressen in einen zusammenhängenden dichten Körper übergeführt wird, wobei der Behälter (1) eine gasdichte, gewellte, balgenähnliche zylindrische erste Wand (2) mit gasdichtem Boden (3) und Deckel (4) hat, die gasdicht an die erste Wand (2) angeschlossen sind, dadurch gekennzeichnet, daß eine innerhalb der ersten Wand angeordnete zylindrische gasdurchlässige zweite Wand (10) vorhanden ist, die mindestens eine aus einem Drahtnetz (15, 16) bestehende Schicht mit zylindrisch verlaufenden Drähten enthält, die im wesentlichen senkrecht zur Längsachse des Behälters (1) gerichtet sind, daß die Dichte des Drahtnetzes der zylindrischen zweiten Wand (10) so bemessen und die zylindrischen zweite Wand (10) im übrigen so aufgebaut ist, daß das gefährliche Material (11) nicht in die ringförmigen Räume (12) zwischen den Wellen der äußeren zylindrische erste Wand (2) und der inneren zylindrische zweite Wand (10) eindringen kann.

8. Behälter nach Anspruch 7, dadurch gekennzeichnet, daß die innere Wand (10) aus einem oder mehreren Zylindern aus metallischem Drahtnetz (15, 16) und aus mindestens einer - radial von innen gesehen - vor oder zwischen diesen Metallnetzen (15, 16) angeordneten Schicht aus papier- oder filzähnlichen Scheiben (17, 18) aus keramischem Material besteht.

9. Behälter nach Anspruch 7 oder 8, dadurch gekennzeichnet, daß der radial äußere Teil der Wellen (Wellenberg) mit einem relativ kleinen Krümmungsradius ($R_1$) und der innere Teil der Wellen (Wellental) mit einem größeren Krümmungsradius ($R_2$) als der äußere Teil der Wellen ausgebildet ist.

10. Behälter nach einem der Ansprüche 7-9, dadurch gekennzeichnet, daß die Tangenten (T) in den Wendepunkten (X) der Wellen einen spitzen Winkel (Alfa) miteinander bilden, der kleiner als 60 Grad ist.

11. Behälter nach einem der Ansprüche 7-10, dadurch gekennzeichnet, daß die Tiefe (H) der Wellen 0,5 bis 2 mal so groß wie die Wellenlänge (L) ist.

**Claims**

1. Process for incapsulating radio active or other dangerous materials (11) in a gas-tight container (1), which material is of particulate and/or lumpy form and either separate or mixed into a mass resistant against leaching by water, and for isostatic pressing of the material in the container (1) into a coherent dense body at a temperature necessary for the bonding process, the dangerous material (11) or the mass containing the dangerous material (11) being filled into a metal container (1) having a corrugated bellows-like cylindrical first wall (2), <u>characterized</u> in that the metal container (1) comprises a second cylindrical wall (10) arranged - in radial view from inside - in front of said first wall (2), said second wall (10) comprising at least one wire net (15,16) with cylindrically extending wires, oriented substantially perpendicularly to the longitudinal axis of the container (1), that the density of the wire net in the cylindrical second wall (10) is dimensioned such and the cylindrical second wall (10) is otherwise constructed such, that the dangerous material (11) is prevented from penetrating into the spaces (12) between the corrugations of the outer cylindrical first wall (2) and the inner cylindrical second wall (10), that the container is being evacuated and sealed, and that thereafter the container is being heated and isostatically pressed in a pressure furnace by means of a gas in a manner known per se.

2. Method according to Claim 1, <u>characterized</u> in that the dangerous material (11) is mixed with a stable metallic material, such as zircaloy.

3. Method according to Claim 1, <u>characterized</u> in that the dangerous material (11) is mixed with a natural rock material, such as a silicate material, or a synthetic rock material, such as SYNROCR®.

4. Method according to Claim 1, <u>characterized</u> in that the dangerous material (11) is mixed with a glass, such as boron silicate glass.

5. Method according to Claim 1, <u>characterized</u> in that the dangerous material (11) is mixed with quartz.

6. Method according to Claim 1, <u>characterized</u> in that the dangerous material (11) is mixed with titanium dioxide.

7. Container (1) for incapsulating radio active or other dangerous materials (11) in a gas-tight container (1), which material is of particulate and/or lumpy form and either separate or mixed into a mass resistant against leaching by water, and which material is converted into a coherent dense body by hot isostatic pressing, the container (1) comprising a gas-tight, corrugated, bellows-like cylindrical first wall (2) with a gas-tight bottom (3) and lid (4), which are gas-tightly connected to the first wall (2), <u>characterized</u> in that there is a cylindrical gas-tight second wall (10) arranged inside of said first wall, said second wall comprising at least one layer consisting of a wire net (15, 16) with cylindrically extending wires, oriented substantially perpendicularly to the longitudinal axis of the container (1), and that the density of the wire net in the cylindrical second wall (10) is dimensioned such and the cylindrical second wall (10) is otherwise constructed such, that the dangerous material (11) is prevented from penetrating into the annular spaces (12) between the corrugations of the outer cylindrical first wall (2) and the inner cylindrical second wall (10).

8. Container according to Claim 7, <u>characterized</u> in that the inner wall (10) consists of one or several cylinders made from metallic wire netting (15, 16) and at least one, contemplated radially from inside, layer of paper-like or felt-like discs (17, 18) of ceramic material arranged - in radial view from inside - in front of or between said metal netting (15, 16).

9. Container according to Claim 7 or 8, <u>characterized</u> in that the radially outer portion of the corrugations (wave crest) are formed with a relatively small radius of curvature (R1) and the inner portion of the corrugations (wave trough) with a larger radius of curvature (R2) than the outer portion of the corrugations.

10. Container according to any of Claims 7 to 9, <u>characterized</u> in that the tangents (T) at the points of inflection (X) of the corrugations form an acute angle (Alfa) with one another that is smaller than 60 degrees.

11. Container according to any of Claims 7 to 10, <u>characterized</u> in that the depth (H) of the corrugations is 0.5 to 2 times the wave length (L).

**Revendications**

1. Procédé d'encapsulation d'un matériau (11) radioactif ou dangereux, qui se présente sous forme de particules et/ou de morceaux, et cela seuls ou incorporés à une masse résistant à la lixiviation par l'eau, dans un récipient (1) étanche au gaz, et de compression isostatique du matériau se trouvant dans le récipient (1) en un corps dense et d'un seul tenant à la température qui est nécessaire à la liaison, le matériau (11) dangereux ou la masse contenant le matériau (11) dangereux étant chargé dans un récipient (1) métallique qui a une première paroi (2) cylindrique, ondulée, semblable à un soufflet, caractérisé en ce que le récipient (1) métallique a une seconde paroi (10) cylindrique disposée en amont, considéré radialement depuis l'intérieur, de ladite première paroi (2), et dont fait partie au moins un treillis métallique (15, 16) ayant des fils métalliques qui s'étendent cylindriquement et qui sont dirigés sensiblement perpendiculairement à l'axe longitudinal du récipient (1), en ce que la densité du treillis métallique de la seconde paroi (10) cylindrique est telle et la seconde paroi (10) cylindrique est, en outre, constituée de telle façon que le matériau (11) dangereux ne peut pas pénétrer dans les espaces (12) compris entre les ondulations de la première paroi (2) cylindrique extérieure et la seconde paroi (10) cylindrique intérieure, en ce que le récipient est mis sous vide et est fermé, et en ce que le récipient est ensuite chauffé et est comprimé isostatiquement, d'une manière en soi connue, dans un four de compression au moyen d'un gaz.

2. Procédé suivant la revendication 1, caractérisé en ce qu'il consiste à mélanger le matériau (11) dangereux à un matériau métallique résistant, comme par exemple le zircaloy.

3. Procédé suivant la revendication 1, caractérisé en ce qu'il consiste à mélanger le matériau (11) dangereux à un type de roche d'origine naturelle, comme par exemple un matériau à base de silicate, ou à une roche de synthèse, comme par exemple du SYNROC.

4. Procédé suivant la revendication 1, caractérisé en ce qu'il consiste à mélanger le matériau dangereux à du verre, comme par exemple à du verre au borosilicate.

5. Procédé suivant la revendication 1, caractérisé en ce qu'il consiste à mélanger le matériau (11) dangereux à du quartz.

6. Procédé suivant la revendication 1, caractérisé en ce qu'il consiste à mélanger le matériau (11) dangereux à du dioxyde de titane.

7. Récipient (1) d'encapsulation d'un matériau (11) radioactif ou dangereux, qui se présente sous forme de particules et/ou de morceaux, et cela seuls ou incorporés à une masse résistant à la lixiviation par l'eau, ce matériau étant transformé en un corps dense et d'un seul tenant par compression isostatique à chaud, le récipient (1) ayant une première paroi (2) cylindrique ondulée, semblable à un soufflet, à fond (3) étanche au gaz et à couvercle (4), qui sont raccordés d'une manière étanche au gaz à la première paroi (2), caractérisé en ce qu'il est prévu une seconde paroi (10) cylindrique, perméable au gaz, disposée à l'intérieur de la première paroi et qui comporte au moins une couche constituée d'un treillis métallique (15, 16) à fils métalliques s'étendant cylindriquement et dirigés sensiblement perpendiculairement à l'axe longitudinal du récipient (1), en ce que la densité du treillis métallique de la seconde paroi (10) cylindrique est telle et la seconde paroi (10) cylindrique est, en outre, constituée de telle façon que le matériau (11) dangereux ne peut pas pénétrer dans les espaces (12) annulaires compris entre les ondulations de la première paroi (2) cylindrique extérieure et la seconde paroi (10) cylindrique intérieure.

8. Récipient suivant la revendication 7, caractérisé en ce que la paroi (10) intérieure est constituée d'un ou de plusieurs cylindres en treillis métallique (15, 16), et d'au moins une couche de disques (17, 18) en matériau céramique semblable à du papier ou à du feutre, disposée considéré radialement depuis l'intérieur, en amont de ces treillis métalliques (15, 16) ou entre eux.

9. Récipient suivant la revendication 7 ou 8, caractérisé en ce que la partie radiale extérieure des ondulations (sommet d'ondulation) a un rayon de courbure ($R_1$) relativement petit et la partie intérieure des ondulations (creux de l'ondulation) a un rayon de courbure ($R_2$) plus grand que la partie extérieure des ondulations.

10. Récipient suivant l'une des revendications 7 à 9, caractérisé en ce que les tangentes (T) aux points d'inflexion (X) des ondulations font entre elles un angle aigu (alpha) inférieure à 60°.

11. Récipient suivant l'une des revendications 7 à 10, caractérisé en ce que la profondeur (H) des ondulations représente de 0,5 à 2 fois la longueur (L) des ondulations.

*FIG.1*

FIG. 2